# EUROPÄISCHE PATENTSCHRIFT

(11) **EP 3 456 600 B1**
(45) Veröffentlichungstag und Bekanntmachung des Hinweises auf die Patenterteilung: **30.03.2022**
(21) Anmeldenummer: 18191659.4
(22) Anmeldetag: 30.08.2018
(51) Int. Cl.: B61B 10/00, B65G 37/00, B23Q 11/00

(54) **FÖRDERSYSTEM EINER BEARBEITUNGSEINHEIT**
CONVEYOR SYSTEM OF A MACHINING UNIT
SYSTÈME DE TRANSPORT D'UNE UNITÉ D'USINAGE

(30) Priorität: 15.09.2017 DE 102017121477
(43) Veröffentlichungstag der Anmeldung: 20.03.2019
(73) Patentinhaber: Kabelschlepp GmbH - Hünsborn, 57482 Wenden-Hünsborn (DE)
(72) Erfinder: Müller, Roland, 57076 Siegen (DE); Diebel, Michael, 35687 Dillenburg (DE)
(74) Vertreter: Keenway Patentanwälte Neumann Heine Taruttis

(56) Entgegenhaltungen:
- EP-A1- 2 394 778
- DE-A1- 2 452 000
- DE-A1- 2 523 642
- DE-A1- 3 817 768
- DE-U1-202016 101 410
- FR-A- 469 529
- JP-A- H0 655 404
- JP-A- 2000 176 215
- JP-A- 2012 115 931
- US-B1- 7 410 569

## Beschreibung

Der Gegenstand der Erfindung bezieht sich auf ein Fördersystem einer Bearbeitungseinheit.

Bearbeitungseinheiten, insbesondere Bearbeitungsmaschinen zur Bearbeitung eines Werkstücks mit einem spannabhebenden Bearbeitungswerkzeug sind an und für sich bekannt. Während der Bearbeitung werden das Werkstück sowie das Werkzeug gekühlt. Zur Erhöhung der Standzeit des Bearbeitungswerkzeugs ist es auch bekannt, dass Schmiermittel verwendet werden. Die während der Bearbeitung entstehenden Abfälle, bspw. in Form von Spänen, gelangen auf einen Späneförderer. Der Späneförderer weist ein Endlosförderband auf. Das Förderband transportiert das Gut von einem Aufgabebereich zu einem Austragbereich und von dort in einen mobilen Auffangbehälter.

Der Späneförderer kann auch zusätzliche Mittel aufweisen, mittels derer bspw. eine Trennung der Bearbeitungsrückstände erfolgt. Hierbei kann es sich bspw. die Trennung von Kühlmittelflüssigkeit von den Bearbeitungsrückständen handeln.

Es ist bekannt, dass mittels solcher Förderer nicht nur Späne, sondern auch andere Bearbeitungsrückstände wie z. B. Verschnitte etc. transportiert werden. Handelt es sich bspw. bei der Bearbeitungseinheit um eine Stanzeinheit oder eine Schneideinheit, so werden auch die während des Stanz- oder Schneidvorgangs entstehenden Abfälle mittels eines Förderers zu einem Auffangbehälter abtransportiert.

Beispiele für die Handhabung von Auffangbehältern sind aus der DE 38 17 768 A1 und der JP 2012 115 931 A bekannt.

Ein weiteres Fördersystem einer Bearbeitungseinheit ist aus der Druckschrift JP 2000 176215 A bekannt.

Bei den bisher bekannten Auffangbehältern handelt es sich im Wesentlichen um Behälter, die mit Rollen oder Rädern versehen sind, die manuell unterhalb oder benachbart zum Austragbereich des Förderers positioniert werden müssen.

Hiervon ausgehend liegt der vorliegenden Erfindung die Zielsetzung zugrunde, ein Fördersystem anzugeben, bei dem die Handhabung eines Auffangbehälters vereinfacht werden soll.

Diese Aufgabe wird erfindungsgemäß für ein Fördersystem einer Bearbeitungseinheit mit den Merkmalen des Anspruchs 1 gelöst. Vorteilhafte Weiterbildungen und Ausgestaltungen des erfindungsgemäßen Fördersystems sind in den abhängigen Ansprüchen angegeben. Die in den Ansprüchen einzeln aufgeführten Merkmale sind in beliebiger technologisch sinnvoller Weise miteinander kombinierbar und können durch erläuternde Sachverhalte aus der Beschreibung ergänzt werden, wobei weitere Varianten der Erfindung aufgezeigt werden.

Das erfindungsgemäße Fördersystem einer Bearbeitungseinheit umfasst einen Förderer mit einen Austragbereich, wenigstens einen Auffangbehälter, der benachbart zum Austragbereich positionierbar ist und wenigstens eine Positioniereinheit, vermittels derer der Auffangbehälter relativ zum Austragbereich positionierbar ist, wobei der Auffangbehälter mit einem Positionierelement der Positioniereinheit lösbar verbindbar ist, wobei der Auffangbehälter ein erstes schwertartig ausgebildetes Kopplungselement und das Positionierelement ein zweites Kopplungselement aufweist, welches ortsfest mit dem Positionierelement verbunden ist.

Durch dieses erfindungsgemäße Fördersystem wird eine vereinfachte Handhabung der Auffangbehälter erreicht. Insbesondere wird durch die Erfindung ein höherer Automatisierungsgrad erzielt. Die Positionierung des Auffangbehälters bedarf nicht mehr einer manuellen Handhabung durch eine Bedienperson.

Ein weiterer Vorteil des erfindungsgemäßen Fördersystems kann darin gesehen werden, dass statt bspw. eines großen Auffangbehälters mehrere kleinere Auffangbehälter genutzt werden können, so dass der Aufwand zur Positionierung verringert wird. Kleinere Auffangbehälter haben den Vorteil, dass eine Anpassung an den zur Verfügung stehenden Raum besser erfolgen kann. Darüber hinaus kann eine bessere Trennung der zum Auffangbehälter geführten Abfälle erreicht werden, wenn bspw. unterschiedliche Bearbeitungswerkstücke aus verschiedenen Materialien verarbeitet werden sollen.

Um ein Austauschen des Auffangbehälters zu vereinfachen, umfassen der Auffangbehälter und die Positioniereinheit Kopplungselemente, um lösbar miteinander verbunden werden zu können. Der Auffangbehälter weist ein erstes schwertartig ausgebildetes Kopplungselement und das Positionierelement weist ein zweites Kopplungselement auf, welches ortsfest mit dem Positionierelement verbunden ist. Die lösbare Verbindung kann so ausgestaltet sein, dass diese keiner zusätzlichen Bedienung bedarf. Es besteht auch die Möglichkeit, dass bspw. die lösbare Verbindung zwischen dem wenigstens einen Auffangbehälter und dem Positionierelement der Positioniereinheit durch eine Sicherungseinheit gesichert wird, so dass ein Entfernen des Auffangbehälters erst dann möglich ist, wenn die Sicherheitseinheit betätigt wird.

Nach einer noch weiteren vorteilhaften Ausgestaltung des erfindungsgemäßen Fördersystems wird vorgeschlagen, dass das zweite Kopplungselement eine Aufnahme aufweist, die in das erste Kopplungselement wenigstens teilweise hineinragt. Vorzugsweise ist das Kopplungselement im oder am Bodenbereich des Auffangbehälters angeordnet, wobei die Positioniereinheit mit ihrem Positionierelement so ausgebildet ist, dass das Positionierelement unterhalb des Auffangbehälters vorgesehen ist. Dies hat den Vorteil, dass ein sehr flaches System bereitgestellt werden kann, das sowohl auf einem Boden als Nachrüstlösung als auch eine Einbaulösung für einen automatischen Auffangbehälter beim Transport geschaffen wird.

Bei dem Positionierelement handelt es sich vorzugsweise um ein Zugmittel, insbesondere eine Kette. Das Zugmittel kann ein Endloszugmittel sein, das bspw. über einen entsprechenden elektrischen Antrieb angetrieben wird, so dass mittels der Betätigung des elektrischen Antriebs die Auffangbehälter sukzessive nach Bedarf benachbart zum Austragbereich des Förderers gebracht werden. Es besteht auch die Möglichkeit, dass für einen jeden Auffangbehälter ein Positionierelement vorgesehen ist. Handelt es sich bei dem Positionierelement um eine Kette, so wird jeder Auffangbehälter von einer gesonderten Kette bewegt. Die Antriebseinheit, bei der es sich bspw. um einen elektrischen Motor handelt, kann mehrere Ritzel aufweisen, wobei ein Ritzel einer bestimmten Kette zugeordnet wird. Durch entsprechendes Ansteuern des Elektromotors kann eine Positionierung der Auffangbehälter erreicht werden.

Um das Positionieren des Auffangbehälters des Fördersystems noch weiter zu vereinfachen wird vorgeschlagen, dass der Auffangbehälter Rollen, insbesondere Spurrollen, aufweist. Die Positioniereinheit weist wenigstens eine Führung auf, in oder auf der wenigstens eine Rolle rollt.

Besonders vorteilhaft ist, wenn der Auffangbehälter ein Fahrgestell mit drei nach Art eines Dreirads angeordneten Rollen aufweist. Hierdurch wird die Möglichkeit geschaffen, bspw. eine Entfernung oder eine Bereitstellung eines Auffangbehälters zu vereinfachen, da fast alle üblichen Stapler oder Hubwagen oder dergleichen verwendet werden können, da der Freiraum ausreichend unterhalb des Auffangbehälters ist, da keine störenden Rollen vorgesehen sind.

Es ist nicht zwingend, dass das Fahrgestell fest mit dem Behälter verbunden ist, oder einen Bestandteil des Auffangbehälters darstellt. Es besteht auch die Möglichkeit, dass der Auffangbehälter lösbar mit dem Fahrgestell verbindbar ist.

Bereits vorstehend wurde zum Ausdruck gebracht, dass das Positionierelement mit einer Antriebseinheit verbunden ist. Bei der Antriebseinheit handelt es sich vorzugsweise um eine elektrisch betätigte Antriebseinheit, welche mit dem Zugmittel zusammenwirkt. Dies ist nicht zwingend notwendig. Es besteht auch die Möglichkeit, dass die Antriebseinheit eine mechanische Antriebseinheit ist. Dabei kann es sich bspw. um eine hydraulisch oder pneumatisch betätigbare Antriebseinheit handeln.

Es besteht auch die Möglichkeit, dass das Positionierelement eine Gewindestange ist, die drehbar ist. Das zweite Kopplungselement weist ein entsprechendes Gewinde auf, so dass durch ein Verdrehen der Gewindestange eine Bewegung des zweiten Kopplungselements in Längsrichtung der Gewindestange und somit des Positionierelements erzielt werden kann.

Gemäß einer noch weiteren vorteilhaften Ausgestaltung des erfindungsgemäßen Fördersystems wird vorgeschlagen, dass das Fördersystem eine Sensoreinheit aufweist, die einen Beladungszustand des aktuell zum Austragsbereich benachbart positionierten Auffangbehälters ermittelt. Des Weiteren ist eine Steuereinrichtung vorgesehen, wobei die Sensoreinheit und die Antriebseinheit signaltechnisch mit der Steuereinrichtung verbunden sind.

Die Sensoreinheit kann bspw. durch einen Drucksensor gebildet sein. Wird ein vorgegebener Beladungszustand des Auffangbehälters erreicht, so wird durch die Steuereinrichtung ein Signal an die Antriebseinheit abgegeben, durch das bewirkt wird, dass der aktuell vor dem bzw. benachbart zu dem Austragbereich positionierter Behälter von dem Austragsbereich bewegt wird und ein neuer Auffangbehälter benachbart zum Austragbereich bereitgestellt wird. Die Steuerung kann auch zusätzliche Funktionen aufweisen. Es kann bspw. durch die Steuerung ermittelt werden, ob ausreichend viele Auffangbehälter vorhanden sind. Sollte dies nicht der Fall sein, kann bspw. ein Warnsignal bereitgestellt werden, welches darauf hinweist, dass mehrere Auffangbehälter bereitgestellt werden sollen oder die Bearbeitungseinheit ihre Verarbeitung unterbrechen soll.

Weitere Vorteile und Einzelheiten der Erfindung werden anhand des in der Zeichnung dargestellten Ausführungsbeispiels erläutert, ohne dass der Gegenstand der Erfindung auf dieses konkrete Ausführungsbeispiel beschränkt ist. Es zeigen:
Fig. 1: schematisch ein Fördersystem mit einer Bearbeitungseinheit,
Fig. 2: in einer perspektivischen Ansicht eine Positioniereinheit ohne Auffangbehälter,
Fig. 3: einen Abschnitt der Positioniereinheit nach Fig. 2 in einer Ansicht von unten und
Fig. 4: die Positioniereinheit in einer Seitenansicht.

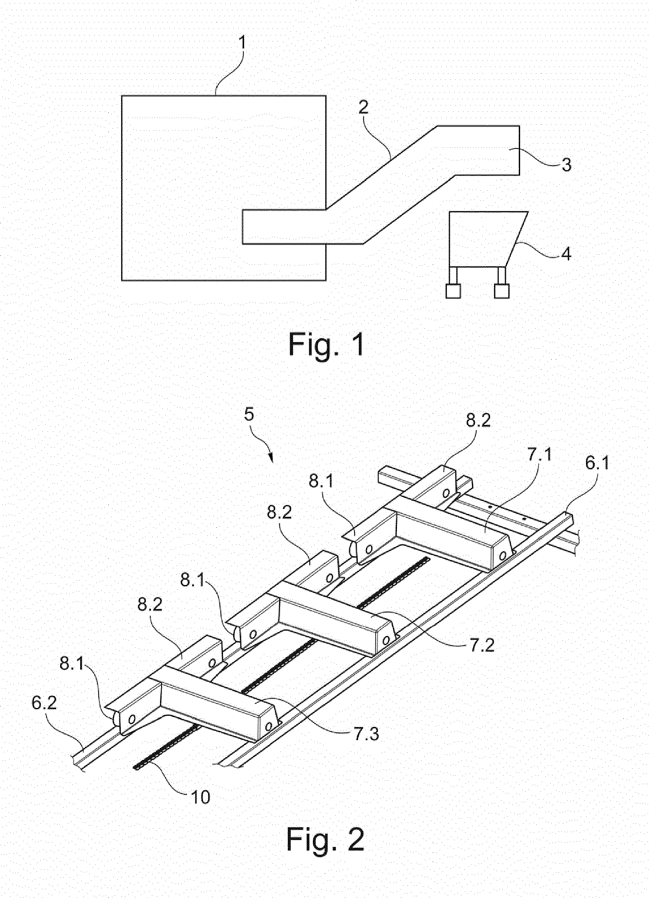

In der Fig. 1 ist schematisch eine Bearbeitungseinheit 1 dargestellt. Bei der Bearbeitungseinheit 1 kann es sich um ein spanabhebendes Bearbeitungszentrum handeln.

Zum Austragen von z. B. Spänen aus einer Bearbeitungseinheit 1 ist ein Förderer 2 vorgesehen. Der Förderer 2 weist einen Austragbereich 3 auf. In dem dargestellten Ausführungsbeispiel ist benachbart zum Austragbereich 3 ein Auffangbehälter 4 positioniert, so dass die mittels des Förderers aus der Bearbeitungseinheit geförderten Materialien in den Auffangbehälter 4 gelangen können.

In der Fig. 2 ist eine Positioniereinheit 5 dargestellt. Um die Übersichtlichkeit zu erhöhen, ist auf die Darstellung von Auffangbehältern verzichtet worden.

Die Positioniereinheit weist zwei parallel zueinander verlaufende Führungen 6.1 und 6.2 auf. Aus der Darstellung nach Fig. 2 ist ersichtlich, dass beabstandet zueinander in Längsrichtung der Führungen 6.1 und 6.2 Fahrgestelle 7.1-7.3 vorgesehen sind. Die Fahrgestelle 7.1-7.3 können in Verbindung mit Auffangbehältern 4 gebracht werden. Hierzu sind die Auffangbehälter 4 am Bodenbereich entsprechend ausgebildet, so dass vorzugsweise eine formschlüssige Verbindung zwischen einem Fahrgestell und einem Auffangbehälter entsteht.

Jedes Fahrgestellt ist, wie aus der Darstellung ersichtlich ist, im Wesentlichen T-förmig. Das Fahrgestell 7.1 sowie die weiteren Fahrgestelle weisen Rollen 8.1 und 8.2 auf, die auf der Führung 6.2 rollen. Ein jedes Fahrgestell 7.1-7.3 weist somit zwei beabstandet zueinander angeordnete Rollen 8.1 und 8.2 auf, die auf der Führung 6.2 abrollen.

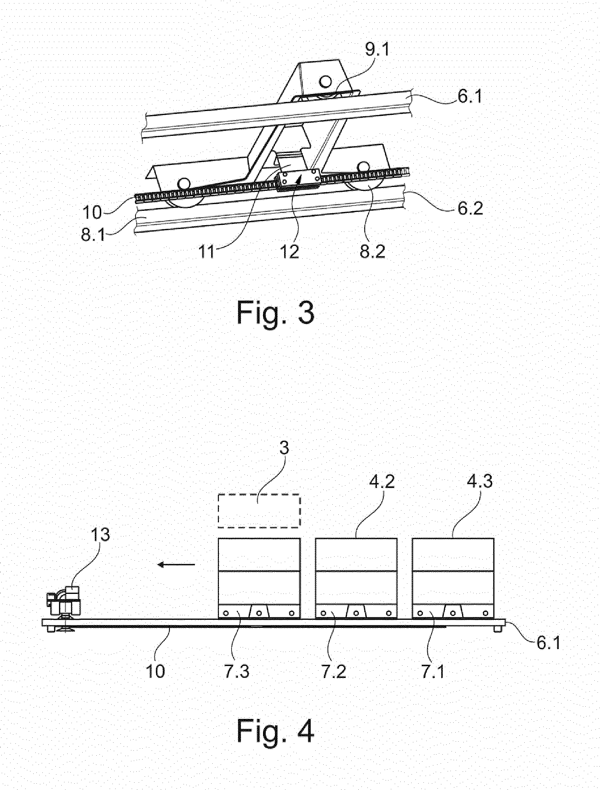

Jedes Fahrgestell 7.1-7.3 weist jeweils eine Rolle 9.1 auf, die auf der Führung 6.1 rollt, wie insbesondere aus Fig. 3 ersichtlich ist. Die Fahrgestelle 7.1-7.3 sind nach Art eines Dreirads ausgebildet. Die Rollen 8.1, 8.2 sowie 9.1 sind vorzugsweise als Spurrollen oder Spurkranzrollen ausgebildet, so dass ein zuverlässiges Rollen der Fahrgestelle 7.1-7.3 in oder auf den Führungen 6.1, 6.2 erreicht wird.

Aus Fig. 2 ist ein Positionierelement 10 ersichtlich, welches mit einem jeden Fahrgestell 7.1-7.3 unmittelbar verbunden ist. Bei dem dargestellten Positionierelement 10 handelt es sich um eine Kette.

Aus der Fig. 3 ist ersichtlich, dass ein Fahrgestell ein erstes Kopplungselement 11 aufweist. Das Positionierelement 10 weist ein zweites Kopplungselement 12 auf. Das zweite Kopplungselement 12 ist ortsfest mit dem Positionierelement 10 verbunden. Aus dem dargestellten Ausführungsbeispiel ist das erste Positionierelement 11 des Fahrgestells schwertartig ausgebildet. Es greift in eine entsprechende Ausnehmung des zweiten Kopplungselements 12 ein. Ist das Fahrgestell über die Kopplungselemente 11, 12 mit dem Positionierelement 10 verbunden, so kann das Fahrgestell in Längsrichtung der Führungen 6.1, 6.2 verfahren werden. Das Fahrgestell ist in dem dargestellten Ausführungsbeispiel lösbar mit dem Positionierelement verbunden. Ist das Fahrgestell mit einem nicht dargestellten Auffangbehälter verbunden, so kann der gesamte Auffangbehälter mit dem Fahrgestell entfernt werden. Dies ist auch relativ einfach, da lediglich das erste Kopplungselement in das zweite Kopplungselement eingreifen muss. Entsprechendes gilt auch für das Bereitstellen eines neuen Auffangbehälters.

In der Fig. 4 ist die Positioniereinheit 5 exemplarisch mit drei Auffangbehältern 4.1-4.3 dargestellt. Die Auffangbehälter 4.1-4.3 sind jeweils mit einem Fahrgestell 7.1-7.3 vorzugsweise lösbar verbunden. Die Fahrgestelle 7.1-7.3 sind entsprechend mit dem Positionierelement 10, bei dem es sich in dem dargestellten Ausführungsbeispiel um eine Kette handelt, verbunden. Aus der Fig. 4 ist ersichtlich, dass das Positionierelement 10 mit einer Antriebseinheit 13 verbunden ist. Bei der Antriebseinheit 13 handelt es sich um einen Elektromotor. Durch Betätigen des Elektromotors und einer entsprechenden Wickelvorrichtung wird ein Teil der Kette, die das Positionierelement 10 darstellt, aufgewickelt, so dass die Behälter 4.1-4.3 in Richtung der Antriebseinheit 13 verfahren werden, um so benachbart zum Austragbereich 3, der gestrichelt in der Fig. 4 dargestellt ist, positioniert zu werden.

Wird an der Antriebseinheit 13 am entgegengesetzten Endbereich der Führungen 6.1, 6.2 bspw. ein Ritzel angeordnet, kann auch eine Endloskette verwendet werden, so dass die Auffangbehälter 4.1-4.3 in beide Richtungen positioniert werden können.

Die Führungen 6.1, 6.2 sowie ggf. die Fahrgestelle 7.1-7.3 können bspw. auch in einer Vertiefung eines Bodens angebracht werden, so dass die Bauhöhe des erfindungsgemäßen Fördersystems verringert wird.

### Bezugszeichenliste

- 1: Bearbeitungseinheit
- 2: Förderer
- 3: Austragbereich
- 4, 4.1-4.3: Auffangbehälter
- 5: Positioniereinheit
- 6.1, 6.2: Führung
- 7.1-7.3: Fahrgestell
- 8.1, 8.2, 9.1: Rollen
- 10: Positionierelement
- 11: erstes Kopplungselement
- 12: zweites Kopplungselement
- 13: Antriebseinheit

## Patentansprüche

1. Fördersystem einer Bearbeitungseinheit (1) umfassend einen Förderer (2) mit einem Austragbereich (3), wenigstens einem Auffangbehälter (4, 4.1-4.3) der benachbart zum Austragbereichs (3) positionierbar ist, **dadurch gekennzeichnet, dass** das Fördersystem wenigstens eine Positioniereinheit (5) umfasst, vermittels
derer der Auffangbehälter (4, 4.1-4.3) positionierbar ist,
wobei der Auffangbehälter (4, 4.1-4.3) mit einem Positionierelement (10) der Positioniereinheit (5) lösbar verbindbar ist,
wobei der Auffangbehälter (4, 4.1-4.3) ein erstes schwertartig ausgebildetes Kopplungselement (11) und das Positionierelement (10) ein zweites Kopplungselement (12) aufweist, welches ortsfest mit dem Positionierelement (10) verbunden ist.

2. Fördersystem nach Anspruch 1, bei dem das zweite Kopplungselement (12) eine Aufnahme aufweist, in die das erste Kopplungselement (11) wenigstens teilweise hineinragt.

3. Fördersystem nach Anspruch 1 oder 2, bei dem das Positionierelement (10) ein Zugmittel, insbesondere eine Kette ist.

4. Fördersystem nach einem der Ansprüche 1 bis 3, bei dem der Auffangbehälter (4, 4.1-4.3) Rollen (8.1, 8.2, 9.1), insbesondere Spurrollen, und die Positioniereinheit (5) wenigstens eine Führung (6.1, 6.2) aufweist auf der wenigstens eine Rolle (8.1, 8.2, 91) abrollt.

5. Fördersystem nach einem der Ansprüche 1 bis 3, bei dem der Auffangbehälter (4, 4.1-4.3) ein Fahrgestell (7.1-7.3) mit drei nach Art eines Dreirads angeordneten Rollen (8.1, 8.2, 9.1) aufweist.

6. Fördersystem nach Anspruch 5, bei dem der Auffangbehälter (4, 4.1-4.3) lösbar mit dem Fahrgestell (7.1-7.3) verbindbar ist.

7. Fördersystem nach wenigstens einem der Ansprüche 1 bis 6, bei dem das Positionierelement (10) mit einer Antriebseinheit (13) verbunden ist.

8. Fördersystem nach Anspruch 7, bei dem eine Sensoreinheit, die einen Beladungszustand des aktuell zum Austragbereich benachbart positionierten Auffangbehälters ermittelt, und eine Steuereinrichtung aufweist, wobei die Sensoreinheit und die Antriebseinheit signaltechnisch mit der Steuereinrichtung verbunden ist.

9. Fördersystem nach Anspruch 8, bei dem die Sensoreinheit wenigstens einen Drucksensor aufweist.

## Claims

1. Conveyor system of a machining unit (1), comprising a conveyor (2) having a discharge region (3), at least one collection container (4, 4.1 - 4.3) which is able to be positioned so as to be adjacent to the discharge region (3),
**characterized in that** the conveyor system comprises at least one positioning unit (5) by means of which the collection container (4, 4.1 - 4.3) is able to be positioned;
wherein the collection container (4, 4.1 - 4.3) is able to be releasably connected to a positioning element (10) of the positioning unit (5);
wherein the collection container (4, 4.1 - 4.3) has a first coupling element (11) configured in the manner of a sword, and the positioning element (10) has a second coupling element (12) which is connected in a locationally fixed manner to the positioning element (10).

2. Conveyor system according to Claim 1, in which the second coupling element (12) has a receptacle, the first coupling element (11) protruding at least partially into said receptacle.

3. Conveyor system according to Claim 1 or 2, in which the positioning element (10) is a traction means, in particular a chain.

4. Conveyor system according to one of Claims 1 to 3, in which the collection container (4, 4.1 - 4.3) has wheels (8.1, 8.2, 9.1), in particular tracking wheels, and the positioning unit (5) has at least one guide (6.1, 6.2), at least one of the wheels (8.1, 8.2, 9.1) rolling on said guide (6.1, 6.2).

5. Conveyor system according to one of Claims 1 to 3, in which the collection container (4, 4.1 - 4.3) has a chassis (7.1 - 7.3) having three wheels (8.1, 8.2, 9.1) that are disposed in the manner of a tricycle.

6. Conveyor system according to Claim 5, in which the collection container (4, 4.1 - 4.3) is able to be releasably connected to the chassis (7.1 - 7.3).

7. Conveyor system according to at least one of Claims 1 to 6, in which the positioning element (10) is connected to a drive unit (13).

8. Conveyor system according to Claim 7, in which a sensor unit, which determines a loading state of the collection container currently positioned so as to be adjacent to the discharge region, and has a control installation, wherein the sensor unit and the drive unit in terms of signal technology are connected to the control installation.

9. Conveyor system according to Claim 8, in which the sensor unit has at least one pressure sensor.

## Revendications

1. Système de transport d'une unité d'usinage (1), comprenant un convoyeur (2) pourvu d'une zone de déversement (3), au moins un récipient collecteur (4, 4.1 à 4.3) qui peut être positionné à proximité de la zone de déversement (3),
**caractérisé en ce que** le système de transport comprend au moins une unité de positionnement (5) qui permet de positionner le récipient collecteur (4, 4.1 à 4.3),
le récipient collecteur (4, 4.1 à 4.3) pouvant être relié de manière amovible à un élément de positionnement (10) de l'unité de positionnement (5),
le récipient collecteur (4, 4.1 à 4.3) présentant un premier élément de couplage (11) réalisé en forme de lame, et l'élément de positionnement (10) présentant un deuxième élément de couplage (12) qui est relié de manière stationnaire à l'élément de positionnement (10).

2. Système de transport selon la revendication 1, dans lequel le deuxième élément de couplage (12) présente un logement dans lequel le premier élément de couplage (11) fait saillie au moins partiellement.

3. Système de transport selon la revendication 1 ou 2, dans lequel l'élément de positionnement (10) est un moyen de traction, en particulier une chaîne.

4. Système de transport selon l'une quelconque des revendications 1 à 3, dans lequel le récipient collecteur (4, 4.1 à 4.3) présente des galets (8.1, 8.2, 9.1), en particulier des galets profilés, et l'unité de positionnement (5) présente au moins une glissière (6.1, 6.2) sur laquelle roule au moins un galet (8.1, 8.2, 9.1).

5. Système de transport selon l'une quelconque des revendications 1 à 3, dans lequel le récipient collecteur (4, 4.1 à 4.3) présente un châssis (7.1 à 7.3) pourvu de trois galets (8.1, 8.2, 9.1) disposés à la manière d'un tricycle.

6. Système de transport selon la revendication 5, dans lequel le récipient collecteur (4, 4.1 à 4.3) peut être relié de manière amovible au châssis (7.1 à 7.3).

7. Système de transport selon au moins l'une des revendications 1 à 6, dans lequel l'élément de positionnement (10) est relié à une unité d'entraînement (13).

8. Système de transport selon la revendication 7, dans lequel une unité de capteur, qui détermine un état de chargement du récipient collecteur positionné actuellement à proximité de la zone de déversement, et présente un dispositif de commande, l'unité de capteur et l'unité d'entraînement étant reliées au dispositif de commande pour la transmission de signaux.

9. Système de transport selon la revendication 8, dans lequel l'unité de capteur présente au moins un capteur de pression.
